# EUROPÄISCHE PATENTSCHRIFT

(11) **EP 0 771 240 B1**
(45) Veröffentlichungstag und Bekanntmachung des Hinweises auf die Patenterteilung: **28.10.1998**
(21) Anmeldenummer: 95925828.6
(22) Anmeldetag: 05.07.1995
(51) Int. Cl.: B23D 65/00

(54) **WERKZEUG ZUR SPANABHEBENDEN BEARBEITUNG UND VERFAHREN ZU DESSEN HERSTELLUNG**
MATERIAL REMOVING TOOL AND PROCESS FOR ITS PRODUCTION
OUTIL POUR USINAGE PAR ENLEVEMENT DE COPEAUX ET SON PROCEDE DE PRODUCTION

(30) Priorität: 27.07.1994 DE 4426547
(43) Veröffentlichungstag der Anmeldung: 07.05.1997
(73) Patentinhaber: Ledermann GmbH, 72160 Horb (DE)
(72) Erfinder: Gehart, Wilfried, 72160 Horb (DE)
(74) Vertreter: Riedel, Peter, Dipl.-Ing.
(86) Internationale Anmeldenummer: EP9502596
(87) Internationale Veröffentlichungsnummer: WO9603246

(56) Entgegenhaltungen:
- EP-A- 0 106 929
- EP-A- 0 163 914
- EP-A- 0 337 753

## Beschreibung

Die Erfindung bezieht sich auf ein Werkzeug zur spanabhebenden Bearbeitung der im Oberbegriff des Anspruchs 1 angegebenen Gattung, sowie auf ein Verfahren zur Herstellung eines solchen Werkzeugs.

Aus der DE-34 34 714 C2 ist ein Kreissägeblatt mit mehreren Schneidelementen bekannt, bei dem der Hauptkörper des Kreissägeblattes aus Stahl besteht. Die Schneidelemente sind einzeln oder in Gruppen an Zwischenstücken befestigt, welche wiederum mit dem Hauptkörper stoffschlüssig verbunden sind. Ein solches Kreissägeblatt ist jedoch schwierig herzustellen, da zunächst die Schneidelemente an den Zwischenstücken ausgerichtet und dann mit diesen verbunden werden müssen und danach eine weitere Ausrichtung der Zwischenelemente an dem Hauptkörper mit anschließender stoffschlüssiger Verbindung notwendig ist. Durch diesen zweistufigen Herstellungsprozeß ist ein hoher Arbeitsaufwand erforderlich und zudem kann nicht ausgeschlossen werden, daß erhebliche Rund- und Planlauffehler auftreten. Solche Fehler müssen durch abschließenden Schneidenschliff ausgeglichen werden, was mit einer beachtlichen Materialabtragung verbunden ist. Selbst wenn eine gute Plan- und Rundlaufgenauigkeit am Schneidenflugkreis erreicht wird, so treten mit zunehmender Umfangsgeschwindigkeit Fluchtfehler zwischen dem Hauptkörper und den Zwischenstücken auf. Die Zwischenstücke werden in Ausnehmungen des Hauptkörpers mittels eines Laserstrahls eingeschweißt, wohingegen das Schneidelement an dem Zwischenstück durch konventionelle Lötung befestigt ist. Bei der Verlötung breitet sich die Wärme im Schneidezahn und im Zwischenstück aus, wodurch die Gefahr besteht, daß eine Versprödung und Rißbildung auftritt und bei Schneidezähnen mit polykristallinen Diamanten aufgrund der Wärmeempfindlichkeit eine Graphitierung eintritt.

Es sind außerdem bereits Schleifscheiben bzw. Trennscheiben für die Bearbeitung von Gestein bekannt, bei denen am Scheibenumfang mehrere Segmente mit Deckschichten aus polykristallinen Diamanten vorhanden sind. Als Träger der Diamantschicht besitzen die Segmente eine Metallplatte mit einer Wölbung, die dem Außenumfang des Schleifscheibenhauptkörpers entspricht. Die Schneidelemente sind mit der Mantelfläche des Hauptkörpers mittels Laserstrahlschweißung verbunden. Auf derartige Schleifscheiben bzw. Trennscheiben wirkt eine Belastung im wesentlichen in Scherrichtung der Schweißverbindung.

In der DE 33 07 170 C2 ist ein Sägeblatt und Verfahren zu seiner Herstellung beschrieben, wobei das Sägeblatt aus einem Grundkörper mit daran befestigten Schneidstoffplatten besteht. Der Hauptkörper besitzt annähernd radial verlaufende Aufnahmeflächen für die Schneidstoffplatten, wobei diese durch Löten, Schweißen oder Kleben an dem Hauptkörper befestigt sind. Beim Löten oder Schweißen tritt eine großflächige Erwärmung im Hauptkörper und den Schneidstoffplatten auf, die jedoch zu der Gefahr der Versprödung und Rißbildung und bei Schneidezähnen mit polykristallinen Diamanten zur Graphitierung des Werkstoffs führt. Bei dem zur Vermeidung der Erwärmung vorgeschlagenen Befestigen mittels Kleben besteht jedoch der Nachteil, daß für hochbeanspruchte Werkzeuge die Festigkeit der Klebeverbindung nicht ausreicht und außerdem keine ausreichende Alterungsbeständigkeit gegeben ist.

Der Erfindung liegt die Aufgabe zugrunde, ein Werkzeug zur spanabhebenden Bearbeitung der im Oberbegriff des Anspruchs 1 angegebenen Gattung zu schaffen, bei dem auf einfache Weise eine zuverlässige und hochbelastbare Befestigung des Schneidezahns am Hauptkörper erreicht ist. Außerdem soll ein Verfahren zur Herstellung eines solchen Werkzeugs geschaffen werden.

Die Aufgabe wird gemäß der Erfindung mit den Merkmalen des Anspruchs 1 gelöst. Bezüglich des Verfahrens wird die Aufgabe durch die Merkmale des Anspruchs 10 gelöst.

Die Vorteile der Erfindung sind im wesentlichen darin zu sehen, daß durch die Ausrichtung der Aufnahmefläche die Schwerpunktachsen der Schneidezähne und des Tragkörpers in einer Flucht liegen und somit die auftretenden Zentrifugalkräfte und die Momente, die aus den Schnittschlägen resultieren, zuverlässig aufgenommen werden. Außerdem sind alle Schneidezähne am selben Hauptkörper direkt befestigt, so daß eine einmalige Positionierung jedes Zahnes ausreicht, um eine Plan- und Rundlaufgenauigkeit zu erreichen. Ein weiterer Vorteil besteht darin, daß durch die punkt- oder linienförmige Erwärmung die Gefügestruktur der zu verbindenden Teile und insbesondere der Schneidezähne nicht beeinträchtigt wird. Die durch Wärmeeinwirkung, beispielsweise durch Laserschweißung, hergestellte direkte Verbindung zwischen dem Hauptkörper und den Schneidezähnen ist außerdem im Vergleich zu einer Lötverbindung weniger empfindlich gegen Überhitzung, wie sie gelegentlich beim Zerspanen von Holz und Holzwerkstoffen auftritt. Beim Zerspanen solcher Werkstoffe kann wegen sehr großer zu zerspanender Werkstoffmenge im Spanraum nicht vollständig aufgenommenes Spangut in den Spalt zwischen Schnittfuge und Hauptkörper gepreßt werden, was zu einer temporären extremen Erhitzung führen kann. Die Folge kann ein Ablösen von nur angelöteten Schneidezähnen sein. Dieser Nachteil und die damit verbundene Unfallgefahr wird durch die erfindungsgemäß vorgesehene Verbindung vermieden, die weit besser hitzebeständig ist als eine Lötverbindung.

Zwischen der Aufnahmefläche des Hauptkörpers und dem Schneidezahn kann eine Zusatzstoffschicht angeordnet sein. Diese Zusatzstoffschicht enthält vorzugsweise ein Mittel zur Erhöhung der Benetzungsfähigkeit und/oder Adhäsionswirkung. Zweckmäßig wird eine Metall-Legierung verwendet. Eine andere Ausführungsform des Werkzeugs besteht darin, daß der Schneidezahn ohne Stoffzusatz mit der Aufnahmefläche verbunden ist. Der Schneidezahn besteht vorzugsweise aus Hartmetall und ist an seiner Schneidfläche mit einer Deckschicht aus polykristallinem Diamant versehen.

Ausführungsbeispiele der Erfindung sind nachstehend anhand der Zeichnung näher erläutert. In der Zeichnung zeigt:
- Fig. 1: einen segmentförmigen Ausschnitt eines Kreissägeblattes;
- Fig. 2: Schneidezähne mit verschleißhemmender, hitzeempfindlicher Deckschicht und Zusatzstoffschicht für die Verbindung am Hauptkörper;
- Fig. 3: Ausführungsvarianten zu Fig. 2;
- Fig. 4: einen in den Hauptkörper eingesetzen Schneidezahn in teilweise perspektivischer Darstellung
- Fig. 5: eine Ansicht in Richtung des Pfeiles V in Fig. 4.

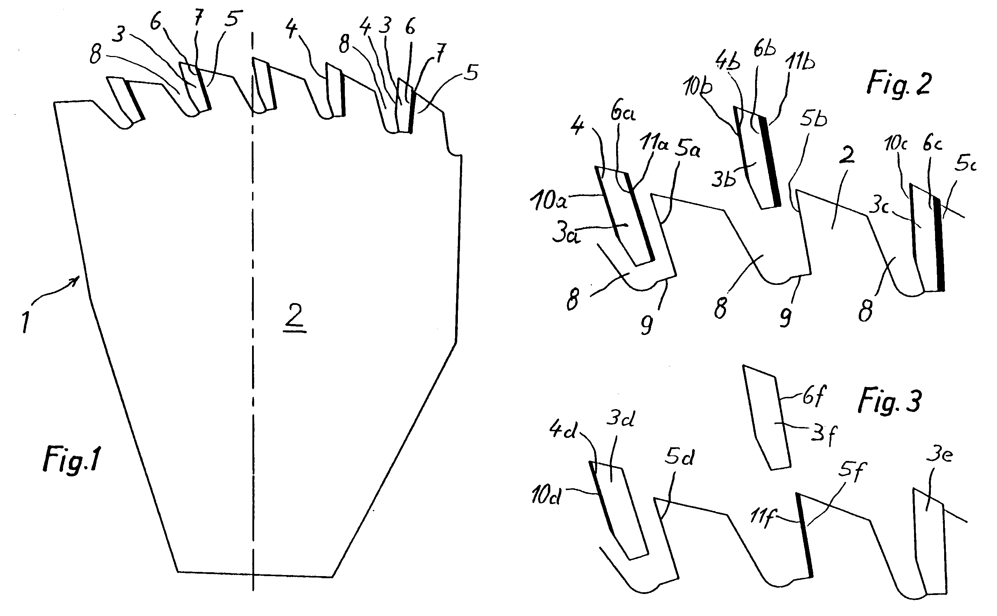

Die Fig. 1 zeigt am Beispiel eines Kreissägeblattes ein Werkzeug 1 zur spanabhebenden Bearbeitung mit einem metallischen Hauptkörper 2 und mehreren Schneidezähnen 3. Vorzugsweise ist als Material für den Hauptkörper 2 ein vergüteter Stahl vorgesehen. Die Schneidezähne 3, die insbesondere aus Hartmetall bestehen, besitzen eine Schneidfläche 4, die, bezogen auf die Rotationsachse, etwa radial verläuft. Am Hauptkörper 2 ist für jeden Schneidezahn 3 eine mindestens annähernd radial verlaufende Aufnahmefläche 5 vorgesehen, an welcher der Schneidezahn 3 mit seiner von der Schneidfläche 4 entfernt liegenden Seite 6 anliegt. Die Aufnahmefläche 5 wird durch Ausnehmungen 8 am Umfangsrand des Hauptkörpers 2 gebildet. Die Schneidezähne 3 sind mit dem Hauptkörper 2 stoffschlüssig verbunden, wobei diese stoffschlüssige Verbindung durch punkt- oder linienförmige, kurzzeitige Erwärmung im Bereich einer durch die Aufnahmefläche 5 vorgegebenen Verbindungszone 7 erfolgt.

In Fig. 2 ist ein Ausschnitt des Umfangsbereichs des Hauptkörpers 2 mit den Ausnehmungen 8 und verschiedenen Schneidezähnen 3a, 3b und 3c gezeigt. Die Ausnehmung 8 wird entgegen der Drehrichtung von der radial verlaufenden Auflagefläche 5 begrenzt, an deren radial innen liegendem Ende sich ein rechtwinklig vorspringender Absatz 9 anschließt. Durch diesen Vorsprung 9 ergibt sich eine definierte Einbauposition der Schneidezähne 3, wodurch die Rundlaufgenauigkeit des Werkzeugs 1 gewährleistet ist. Die Schneidezähne 3a, 3b und 3c weisen an ihrer Schneidfläche 4 jeweils eine verschleißhemmende Deckschicht 10a, 10b, 10c auf. Der Schneidezahn 3a ist an der Seite 6a mit einer Zusatzstoffschicht 11a versehen, durch die die Benetzungsfähigkeit und/oder die Adhäsionswirkung erhöht wird. Der Schneidezahn 3b ist an seiner Seite 6b mit einer Zusatzstoffschicht 11b versehen, die aus einer Metall-Legierung besteht. Während die Schneidezähne 3a und 3b in einer Darstellung kurz vor dem Positionieren in den Ausnehmungen 8 an der Aufnahmefläche 5 und dem Vorsprung 9 gezeigt sind, ist der Schneidezahn 3c in der definierten Position am Hauptkörper 2 befestigt dargestellt. Zur Befestigung des Schneidezahns 3c ist lediglich eine kurzzeitige, punkt- oder linienförmige Erwärmung im Bereich der Auflagefläche 5c und der Seite 6c erforderlich. Dadurch bleiben der Schneidezahn 3b und der Hauptkörper 2 thermisch im wesentlichen unbelastet. Außerdem ist dadurch gewährleistet, daß die hitzeempfindliche Deckschicht 10c des Schneidezahnes 3c kalt bleibt und dadurch keine Gefahr der Zerstörung infolge von Graphitisierung besteht.

Eine der Fig. 2 ähnliche Anordnung ist in der Fig. 3 gezeigt, wobei der Schneidezahn 3d an seiner Schneidfläche 4d mit der Deckschicht 10d versehen und auf der Seite 6d unbeschichtet ist. Ein solcher Schneidezahn 3d wird in Anlage mit der Aufnahmefläche 5d gebracht und durch die punkt- oder linienförmige Erwärmung mit der Aufnahmefläche 5d des Hauptkörpers 2 verschweißt. Ein solchermaßen angeschweißter Schneidezahn, jedoch ohne verschleißhemmende Deckschicht, ist als Schneidezahn 3e dargestellt. An der Aufnahmefläche 5f ist eine Schicht 11f aus einer Metall-Legierung, beispielsweise in Form eines Plättchens, aufgebracht, so daß eine Beschichtung des Schneidezahnes 3f an dessen Seite 6f entbehrlich ist.

Durch die punkt- oder linienförmige Erwärmung kann zwischen der Seite 6 des Schneidezahnes 3 und der Auflagefläche 5 des Hauptkörpers 2 eine flächige Verbindung hergestellt werden, insbesondere bei Verwendung einer Zusatzstoffschicht 11a oder 11b, die als Zusatzstoff eine Metall-Legierung enthält, wie sie bei Schweißvorgängen, auch beim Laserschweißen, angewendet wird. Anstelle einer flächigen Verbindung kann aber auch eine linienförmige Verbindung erzeugt werden.

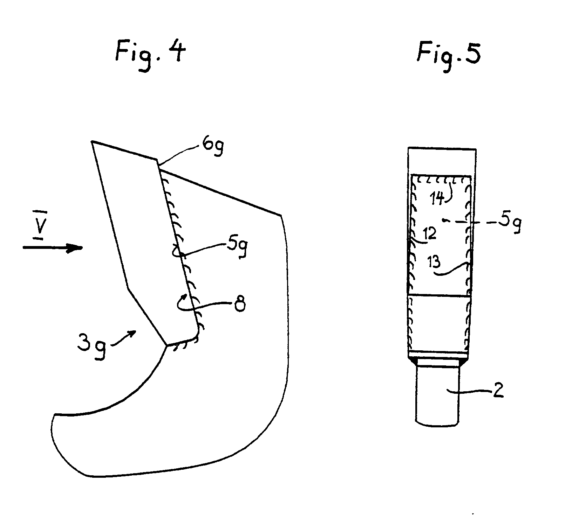

Die Fig. 4 und 5 zeigen für einen Schneidezahn 3g eine solche linienförmige Verbindung mittels zweier seitlicher Schweißnähte 12 und 13, die an eine quer liegende Schweißnaht 14 angrenzen, welche am äußeren Rand der Ausnehmung 8 liegt. Die Schweißnähte 12, 13 und 14 befinden sich am Rand der Aufnahmefläche 5g. Die punkt- oder linienförmige Erwärmung wird also nur an der Randseite der Aufnahmefläche erzeugt, und für diese linienförmige Verbindung ist im Vergleich zu einer flächigen Verbindung eine geringere Wärmemenge erforderlich. Die thermischen Einflüsse auf den Hauptkörper und die Schneidelemente beim Herstellen der Verbindung sind dadurch auf ein Minimum reduziert. Auch bei dieser Ausführung kann zwischen der Seite 6g des Schneidezahnes 3g und der Aufnahmefläche 5g des Hauptkörpers 2 eine Zusatzstoffschicht vorgesehen werden.

## Patentansprüche

1. Werkzeug zur spanabhebenden Bearbeitung, insbesondere Kreissägeblatt oder Schaftfräser, mit einem metallischen Hauptkörper und mindestens einem eine etwa radiale Schneidfläche aufweisenden Schneidezahn, wobei an dem Hauptkörper für jeden Schneidezahn eine mindestens annähernd radial verlaufende Aufnahmefläche vorgesehen ist,
dadurch gekennzeichnet, daß an der radial verlaufenden Aufnahmefläche (5, 5a-5f) der Schneidezahn (3, 3a-3g) mit dem Hauptkörper (2) durch punkt- oder linienförmige, kurzzeitige Erwärmung an der Randseite der Aufnahmefläche stoffschlüssig verbunden ist.

2. Werkzeug nach Anspruch 1,
dadurch gekennzeichnet, daß zwischen der Aufnahmefläche (5a, 5b, 5c, 5f, 5g) des Hauptkörpers (2) und dem Schneidezahn (3a, 3b, 3c, 3f, 3g) eine Zusatzstoffschicht angeordnet ist.

3. Werkzeug nach Anspruch 2,
dadurch gekennzeichnet, daß die Zusatzstoffschicht (11a) Mittel zur Erhöhung der Benetzungsfähigkeit und/oder Adhäsionswirkung enthält.

4. Werkzeug nach Anspruch 2,
dadurch gekennzeichnet, daß die Zusatzstoffschicht (11b, 11f) eine für Schweißvorgänge, insbesondere für das Laserschweißen, geeignete Metall-Legierung enthält.

5. Werkzeug nach Anspruch 1,
dadurch gekennzeichnet, daß der Schneidezahn (3d, 3e) ohne Stoffzusatz mit der Aufnahmefläche (5d) verbunden ist.

6. Werkzeug nach einem der vorhergehenden Ansprüche,
dadurch gekennzeichnet, daß der Schneidezahn (3) aus Hartmetall besteht.

7. Werkzeug nach Anspruch 6,
dadurch gekennzeichnet, daß der Schneidezahn (3a, 3b, 3c, 3d) an seiner Schneidfläche (4a, 4b, 4c, 4d) mit einer Deckschicht (10a, 10b, 10c, 10d) aus polykristallinem Diamant versehen ist.

8. Werkzeug nach einem der Ansprüche 1 bis 7,
dadurch gekennzeichnet, daß der Schneidezahn (3, 3a bis 3f) mit der Aufnahmefläche (5, 5a bis 5f) flächig verbunden ist.

9. Werkzeug nach einem der Ansprüche 1 bis 7,
dadurch gekennzeichnet, daß der Schneidezahn (39) mit der Aufnahmefläche (5g) linienförmig, insbesondere durch Schweißnähte (12; 13; 14) verbunden ist.

10. Verfahren zur Herstellung eines Werkzeugs zur spanabhebenden Bearbeitung, bei dem mindestens ein eine radiale Schneidfläche aufweisender Schneidezahn mit einem metallischen Hauptkörper verbunden wird, wobei der Schneidezahn mit seiner von der Schneidfläche abgewandten Seite an eine mindestens annähernd radial verlaufende Aufnahmefläche angelegt wird,
dadurch gekennzeichnet, daß entlang der Aufnahmefläche (5, 5a-5f) für den Schneidezahn (3, 3a-3f) eine punkt- oder linienförmige, kurzzeitige Erwärmung an der Randseite der Aufnahmefläche erfolgt, wodurch der Schneidezahn mit dem Hauptkörper stoffschlüssig verbunden wird.

11. Verfahren nach Anspruch 10,
dadurch gekennzeichnet, daß die Energie zur kurzzeitigen Erwärmung mittels Laserstrahl zugeführt wird.

## Claims

1. Tool for the material-removing machining, in particular a circular saw blade or end mill, with a metal main body and at least one cutting tooth with an approximately radial cutting surface, an at least approximately radial support area being provided on the main body for each cutting tooth, characterised in that on the radial support area (5, 5a-5f), the cutting tooth (3, 3a-3g) is materially bonded to the main body (2) by brief heating applied at points or in lines on the edge side of the support area.

2. Tool according to Claim 1, characterised in that a layer of additional material is located between the support area (5a, 5b, 5c, 5f, 5g) of the main body (2) and the cutting tooth (3a, 3b, 3c, 3f, 3g).

3. Tool according to Claim 2, characterised in that the layer of additional material (11a) contains means for increasing the wetting capacity and/or adhesive action.

4. Tool according to Claim 2, characterised in that the layer of additional material (11b, 11f) contains a metal alloy which is suitable for welding processes, in particular for laser welding.

5. Tool according to Claim 1, characterised in that the cutting tooth (3d, 3e) is connected to the support area (5d) without the addition of material.

6. Tool according to one of the preceding Claims, characterised in that the cutting tooth (3) consists of metal carbide.

7. Tool according to Claim 6, characterised in that the cutting tooth (3a, 3b, 3c, 3d) is provided on its cutting surface (4a, 4b, 4c, 4d) with a surface layer (10a, 10b, 10c, 10d) of polycrystalline diamond.

8. Tool according to one of Claims 1 to 7, characterised in that the cutting tooth (3, 3a to 3f) is surface bonded to the support area (5, 5a to 5f).

9. Tool according to one of Claims 1 to 7, characterised in that the cutting tooth (39) is bonded to the support area (5g) in lines, in particular by welding seams (12; 13; 14).

10. Method for the manufacture of a tool for material-removing machining, in which at least one cutting tooth with a radial cutting surface is bonded to a metal main body, the cutting tooth being applied by its side remote from the cutting surface against a support area extending at least approximately radially, characterised in that along the support area (5, 5a-5f) for the cutting tooth (3, 3a-3f), brief heating applied at points or in lines on the edge side of the support area takes place, due to which the cutting tooth is materially bonded to the main body.

11. Method according to Claim 10, characterised in that the energy for the brief heating is supplied by means of a laser beam.

## Revendications

1. Outil d'usinage par enlèvement de matière, en particulier lame de scie circulaire ou fraise à queue, comportant un corps principal métallique et au moins une dent présentant une surface de coupe à peu près radiale, sur le corps principal étant prévue pour chaque dent une surface de montage s'étendant au moins approximativement radialement, caractérisé par le fait que sur la surface de montage s'étendant radialement (5, 5a à 5f), la dent (3, 3a à 3g) est jointe au corps principal (2) avec union de matière par bref chauffage ponctuel ou linéaire sur le côté de bord de la surface de montage.

2. Outil selon la revendication 1, caractérisé par le fait qu'entre la surface de montage (5a, 5b, 5c, 5f, 5g) du corps principal (2) et la dent (3a, 3b, 3c, 3f, 3g) est placée une couche de matière d'apport.

3. Outil selon la revendication 2, caractérisé par le fait que la couche de matière d'apport (11a) contient des agents d'augmentation du pouvoir mouillant et/ou de l'adhérence.

4. Outil selon la revendication 2, caractérisé par le fait que la couche de matière d'apport (11b, 11f) contient un alliage métallique approprié à des opérations de soudage, en particulier au soudage au laser.

5. Outil selon la revendication 1, caractérisé par le fait que la dent (3d, 3e) est jointe à la surface de montage (5d) sans apport de matière.

6. Outil selon l'une des revendications précédentes, caractérisé par le fait que la dent (3) est en métal dur.

7. Outil selon la revendication 6, caractérisé par le fait que la dent (3a, 3b, 3c, 3d) est pourvue sur sa surface de coupe (4a, 4b, 4c, 4d) d'une couche de couverture (10a, 10b, 10c, 10d) en diamant polycristallin.

8. Outil selon l'une des revendications 1 à 7, caractérisé par le fait que la dent (3, 3a à 3f) est jointe à la surface de montage (5, 5a à 5f) suivant une surface.

9. Outil selon l'une des revendications 1 à 7, caractérisé par le fait que la dent (3g) est jointe à la surface de montage (5g) linéairement, en particulier par des cordons de soudure (12 ; 13 ; 14).

10. Procédé de fabrication d'un outil d'usinage par enlèvement de matière, dans lequel on joint au moins une dent présentant une surface radiale de coupe à un corps principal métallique en l'appliquant par sa face opposée à sa surface de coupe sur une surface de montage s'étendant au moins approximativement radialement, caractérisé par le fait que le long de la surface (5, 5a à 5f) de montage de la dent (3, 3a à 3f), on effectue sur le côté de bord de celle-ci un bref chauffage ponctuel ou linéaire par lequel on joint la dent au corps principal avec union de matière.

11. Procédé selon la revendication 10, caractérisé par le fait que l'énergie pour le bref chauffage est apportée par faisceau laser.
